# EUROPÄISCHE PATENTSCHRIFT

(11) **EP 0 866 231 B1**
(45) Veröffentlichungstag und Bekanntmachung des Hinweises auf die Patenterteilung: **09.01.2002**
(21) Anmeldenummer: 98200826.0
(22) Anmeldetag: 16.03.1998
(51) Int. Cl.: F16B 37/04

(54) **Vorgefertigte Befestigungsvorrichtung**
Prefabricated fastening device
Dispositif de fixation préfabriqué

(30) Priorität: 17.03.1997 NL 1005551; 17.03.1997 NL 1005552
(43) Veröffentlichungstag der Anmeldung: 23.09.1998
(73) Patentinhaber: J. van Walraven B.V., 3641 RK Mijdrecht (NL)
(72) Erfinder: Van Walraven, Jan, 3641 GP Mijdrecht (NL)
(74) Vertreter: Brookhuis, Hendrik Jan Arnold

(56) Entgegenhaltungen:
- DE-A- 3 410 499
- DE-A- 3 437 491
- DE-C- 4 128 157
- DE-U- 29 513 990
- FR-A- 1 496 236
- FR-A- 2 132 645
- FR-A- 2 141 012
- US-A- 4 830 531

## Beschreibung

Die vorliegende Erfinding bezieht sich auf eine vormontierte Befestigungsanordnung nach dem Oberbegriff des Anspruchs 1.

Eine derartige und als ein Ganzes zu handhabende Befestigungsanordnung ist zum Beispiel aus der französischen Patentschrift FR 2 141 012 bekannt. Diese bekannten Befestigungsanordnungen werden insbesondere dazu angewendet, einen Rahmen von länglichen, metallischen Profilelementen, in der Fachwelt bekannt als C-Profilschienen, aufzubauen, welcher Rahmen zum Beispiel zum Aufhängen oder Stützen von Sanitäreinrichtungen und zum Tragen von Deckwänden in Badezimmern dient. Ein Beispiel dieser Anwendung ist in der DE 34 10 499 beschrieben worden. Hierbei dient der aus Metall hergestellte steife Körper der Befestigungsanordnung als kraftaufnehmende Verbindungsanordnung.

Bei der aus der FR 2 141 012 bekannten Befestigungsanordnungen ist vorgesehen, das längliche, zweite Mutterelement in dem Zeitraum zwischen der Fertigung der Anordnung und seiner Montage an einem Profilelement in seiner Montagestellung mittels einer zusammendrückbaren Kunststoffbuchse zu halten, die um den Bolzen zwischen dem steifen Körper und dem zweiten Mutterelement sitzt und unter einer durch ein geringes axiales Zusammendrücken erhaltenen Vorspannung steht. Weiter hat der Körper bei seiner Anlagefläche Vorsprünge, die dazu dienen, den Körper zu der Längsnut in dem Profilelement zu zentrieren. Hierbei liegt das zweite Mutterelement in der Montagestellung in einem Abstand zu diesen Körpervorsprüngen.

Ein Nachteil der bekannten Befestigungsanordnung liegt darin, daß beim Anziehen ihrer Bolzenanordnung, weinig Raum für die zusammengedrückte Kunststoffbuchse verfügbar ist, insbesondere wenn die Flansche des Profilelements dünn sind. In der FR 2 141 012 wird daher vorgestellt, das längliche zweite Mutterelement mit einer ringförmigen Vertiefung, in der die Buchse teilweise steckt, zu versehen. Eine derartige Ausführung des zweiten Mutterelements ist kostspielig und schwer zu realisieren. Ein weiterer Nachteil liegt darin, daß es bei dieser bekannten Befestigungsanordnung erforderlich ist, daß der Bolzen mit geringem Spiel durch die Öffnung in dem Körper steckt, weil sonst die Kunststoffbuchse in die Spalte zwischen dem Bolzen und dem Körper geraten kann und diese dadurch entweder nicht unter Vorspannung steht, oder dafür sorgt, daß der Bolzen in der Öffnung feststeckt und nicht mehr drehen will.

Der vorliegenden Erfindung liegt die Aufgabe zugrunde, eine verbesserte Befestigungsanordnung zu schaffen, die schnell und leicht montiert werden kann. Insbesondere liegt der Erfindung die Aufgabe zugrunde, diese Verbesserung mit fertigungstechnisch einfachen Maßnahmen und ohne eine wesentliche Kostenerhöhung gegenüber der bekannten Befestigungsanordnungen zu realisieren.

Die vorliegende Erfindung schafft eine Befestigungsanordnung nach dem Oberbegriff des Anspruchs 1, die dadurch gekennzeichnet ist, daß das längliche, zweite Mutterelement in der Montagestellung unter Vorspannung an den Vorsprüngen anliegt, so daß das längliche, zweite Mutterelement gegen eine unbeabsichtigte Verdrehung gegenüber dem Körper gesichert ist.

Dadurch, daß bei der Fertigung einer erfindungsgemäßen Befestigungsanordnung das längliche zweite Mutterelement in der Montagestellung an den Vorsprüngen gehalten wird, und die Bolzenanordnung angezogen wird, bis ein geeigneter Anliegedruck gegen die Vorsprünge erreicht ist, kann das Ergebnis erreicht werden, daß dieses zweite Mutterelement danach, also bei der darauffolgenden Lagerung, dem Transport und dem Handhaben der Befestigungsanordnung auf dem Bau, in der Montagestellung bleibt und sich nicht unerwünscht verdreht. Hierdurch ist es in der Praxis nur noch selten notwendig, das zweite Mutterelement, vor dem Anordnen der Befestigungsanordnung an einem Profilelement, zuerst in die Montagestellung zu drehen, was bei der aus der FR 2 141 012 bekannten Befestigungsanordnung oft schon notwendig ist.

Bei der bekannten Befestigungsanordnung gemäß FR 2 141 012 kann die zusammendrückbare Buchse nur ein geringes Drehmoment liefern, um einer unerwünschten Verdrehung des zweiten Mutterelements entgegenzutreten.

Bei der erfindungsgemäßen Befestigungsanordnung ist es möglich und zugleich vorteilhaft, die Vorsprünge so weit auseinander anzuordnen, daß das zweite Mutterelement in der Montagestellung lediglich mit ihren Enden an den Vorsprüngen anliegt. Also wird auf Basis der Reibung zwischen dem zweiten Mutterelement und den Vorsprüngen ein viel größeres, die unerwünschte Verdrehung dieses zweiten Mutterelements verhinderndes Drehmoments erhalten als bei der aus der FR 2 141 012 bekannten Befestigungsanordnung.

In einer bevorzugten Ausführungsform ist eine zusätzliche Feder vorgesehen, die das zweite Mutterelement in der Montagestellung gegen die an sich starren Vorsprünge drückt, und die in der Klemmstellung des zweiten Mutterelements noch immer eine ausreichende Vorspannung aufweist, um den Körper, mit gegebenenfalls bereits an diesem befestigten anderen Profilelementen oder anderen Gegenständen, an seiner Stelle halten zu können, auch wenn das betreffende Profilelement, an dem der Körper angeordnet ist, mit seiner Längsnut vertikal steht. Also können die anderen Profilelemente oder Gegenstände provisorisch an dem betreffenden Profilelement befestigt werden und sind Anpassungen durch das Verschieben der provisorisch angeordneten Befestigungsanordnungen noch leicht möglich. Wenn die Profilelemente richtig aufgestellt sind, oder der Gegenstand sich an der gewünschten Stelle befindet, kann durch das Anziehen der Bolzenanordnung das Ganze festgesetzt werden.

Vorzugsweise ragen die Vorsprünge um eine Höhe über die zugehörige Anlagefläche, die größer als die Stärke der Flansche des betreffenden Profilelements ist, heraus.

Hierdurch kann das zweite Mutterelement ausschließlich durch ein Drehen in die Klemmstellung gebracht werden, ohne, daß ein axialer Druck auf die Bolzenanordnung ausgeübt werden braucht, um das zweite Mutterelement drehen zu können. Durch die Wahl der Höhe der Vorsprünge nur ein wenig größer, zum Beispiel einige Zehntel von Millimetern, als die Stärke der Flansche , kann eine Feder mit einer geringen wirksamen Federlänge angewendet werden. Vorzugsweise wird eine Feder angewendet, die in völlig festgesetztem Zustand der Bolzenanordnung eine flache Form annimmt.

Ein weiterer Vorteil einer derartigen Höhe der Vorsprünge liegt darin, daß bei der provisorischen Montage der Befestigungsanordnung, also mit dem zweiten Mutterelement in der Klemmstellung, aber ohne angezogen zu sein, ein unerwünschtes Zurückdrehen des zweiten Mutterelements in die Montagestellung dadurch verhindert wird, daß dafür ein Eindrücken der Feder erforderlich ist.

Weiter ist es bevorzugt, daß die Vorsprünge in einer Richtung quer zu der sie verbindenden imaginären Linie eine Abmessung haben, die nahezu dem Abstand zwischen den Flanschen des betreffenden Profilelements entspricht. Hierdurch bewirken die Vorsprünge nicht nur eine Ausrichtung und Positionierung des Körpers zu dem Profilelement, sondern auch eine bessere Kraftübertragung.

In einer bevorzugten Ausführungsform ist der Körper aus Metall, zum Beispiel aus Blech oder einem soliden Metallband hergestellt, und sind die Vorsprünge durch ein Herauspressen seiner Teile aus der Fläche des Blechs oder des Bandes gefertigt worden. Diese Bearbeitung kann gleichzeitig mit dem Ausstanzen der Öffnung für die Bolzenanordnung ausgeführt werden.

In einer anderen bevorzugten Ausführungsform sind die Vorsprünge selbst federnd zu dem Körper ausgeführt. Auch dies kann leicht realisiert werden, wenn der Körper aus Metall ausgepreßt wird, indem die Vorsprünge jeweils als eine oder mehrere federnde metallische Lippen ausgeführt werden.

Die Erfindung sieht auch eine Ansführungs form des Erfindungsgedankens vor, bei der der Körper der Befestigungsanordnung einen Unterlegkörper mit einer einzigen Anlagefläche bildet, die sich an die Oberseite des Profilelements anlegt. Ein derartiger Unterlegkörper hat dabei zum Beispiel die Form eines flachen Metallringes, oder einer U-förmig gebogenen Metallplatte.

Derartige Befestigungsanordnungen werden insbesondere verwendet, um Rohrschellen an metallischen Profilelementen zu befestigen, die ihrerseits an der Wand oder an der Decke eines Gebäudes angeordnet sind. Hierbei wird die Rohrschelle auf das freie, mit einem Gewinde versehene Ende einer Bolzenanordnung aufgeschraubt.

Die vorliegende Erfindung wird nachfolgend anhand der Zeichnung erläutert werden. Es zeigt:
- Fig. 1: in Seitenansicht ein erstes Ausführungsbeispiel der erfindungsgemäßen Befestigungsanordnung,
- Fig. 2: die Befestigungsanordnung der Figur 1 in räumlicher Darstellungsweise,
- Fig. 3: die Befestigungsanordnung der Figur 1 auf ein Profilelement aufgestellt, mit der Mutter der Anordnung in der Montagestellung,
- Fig. 4: die Ansicht der Figur 3 mit der Mutter in der Klemmstellung,
- Fig. 5: in einer Ansicht gemäß Figur 2 eine Variante des Körpers der erfindungsgemäßen Befestigungsanordnung mit federnden Vorsprüngen bei einer Anlagefläche,
- Fig. 6: in Seitenansicht, teilweise im Querschnitt, ein zweites Ausführungsbeispiel der erfindungsgemäßen Erfindung,
- Fig. 7: die Anordnung der Figur 6 in räumlicher Darstellungsweise,
- Fig. 8: die Anordnung der Figur 6 auf ein Profilelement aufgestellt, mit dem Bolzenkopf der Anordnung in der Montagestellung, und
- Fig. 9: die Ansicht der Figur 8 mit dem Bolzenkopf in der Klemmstellung.

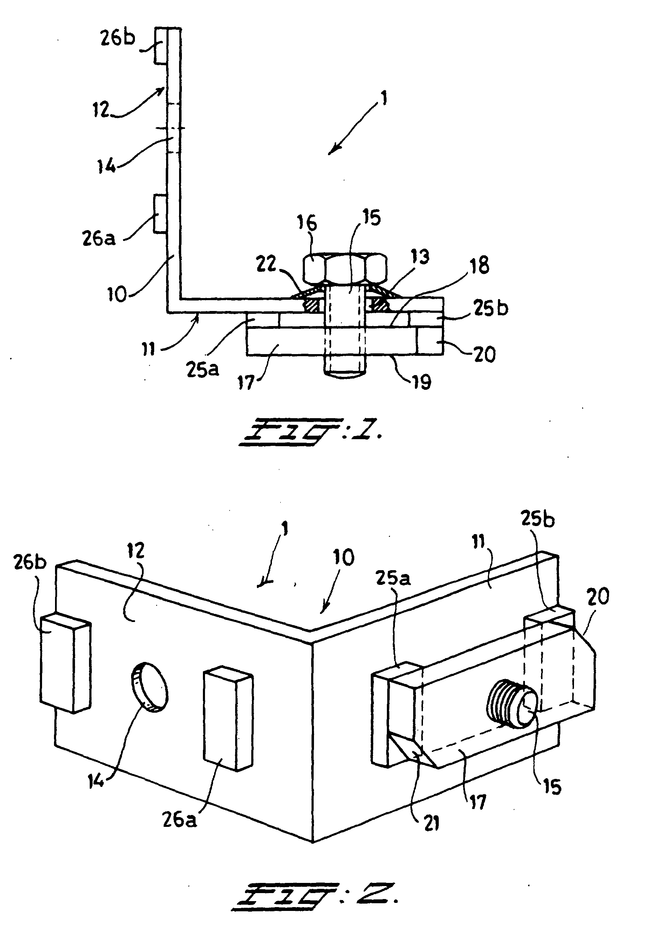

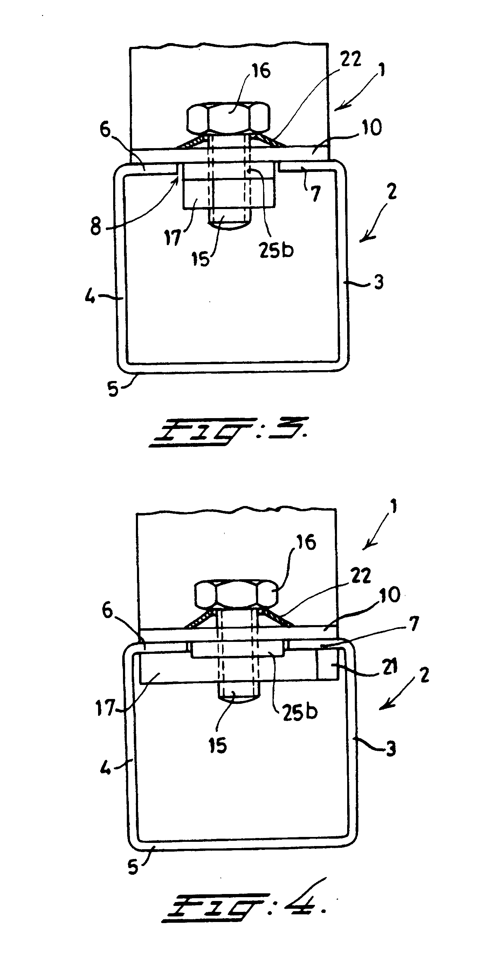

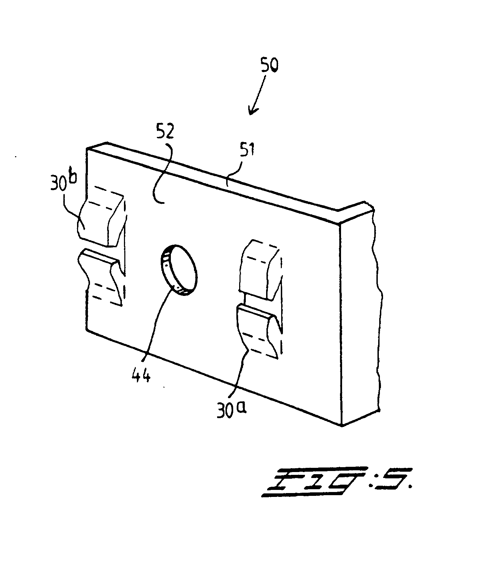

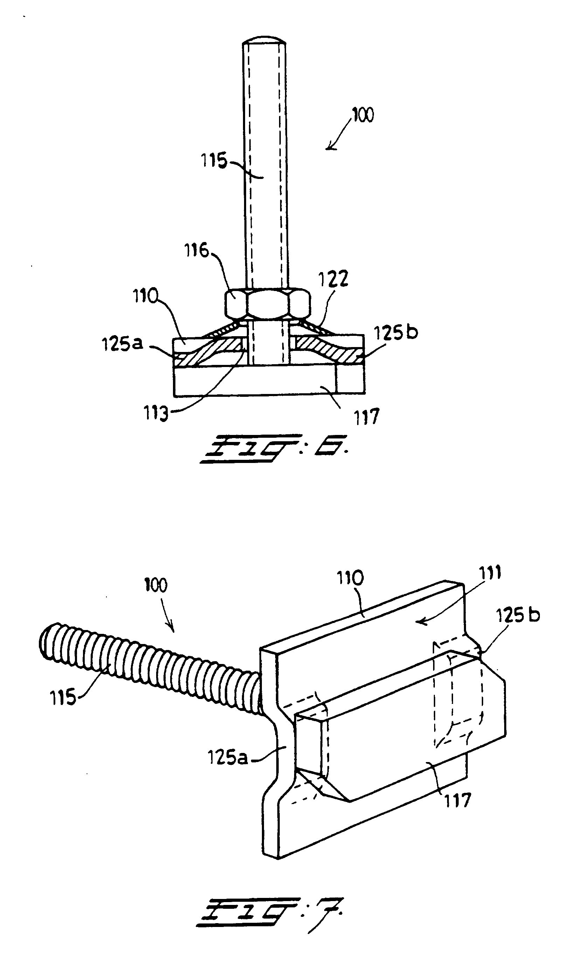

Die in den Figuren 1 - 4 als ein Ganzes vormontierte Befestigungsanordnung 1 ist dazu vorgesehen, ähnliche, längliche, metallische Profilelemente 2 hinsichtlich ihrer Querschnittsform in einem rechten Winkel miteinander zu verbinden. In den Figuren 3 und 4 ist die typische Querschnittsform der Profilelemente 2 ersichtlich. Das Profilelement 2 hat zwei parallele und sich in Längsrichtung erstreckende Seiten 3, 4, einen Boden 5, der die Seiten 3, 4 verbindet, und eine Oberseite, die von zwei ab den Seiten 3, 4 nach innen gerichtete Flanschen 6, 7, die zwischen sich eine Längsnut 8 begrenzen, gebildet ist. Die Längsnut 8 erstreckt sich über die gesamte Länge des Profilelements 2, über die Länge des Profilelements 2 verteilt können jedoch auch mehrere längliche Langlöcher in der Oberseite des Profilelements 2 vorhanden sein.

Die Anordnung 1 umfaßt einen aus Blech oder Metallband ausgestanzten und gebogenen Körper 10, der zwei Anlageflächen 11, 12, jeweils für die Oberseite eines der zu verbindenden Profilelemente 2, definiert. Bei jeder der Anlageflächen 11, 12 ist eine durchgehende Öffnung 13, 14 in dem steifen Körper 10 angeordnet.

Durch jede der Öffnungen 13, 14 steckt ein Schraubenbolzen, auf den eine Mutter aufgeschraubt ist und bei dem eine Feder zwischen dem Bolzenkopf und dem Körper 10 angeordnet ist. Zur Illustration der vorliegenden Erfindung ist in den Figuren 1 - 4 nur eine der beiden identischen Bolzenanordnungen gezeichnet, welche Anordnung den Schraubenbolzen 15 umfaßt und die hiernach näher in Einzelheiten erläutert werden wird.

Der Schraubenbolzen 15 hat hier einen Sechskantbolzenkopf 16, eventuell mit einem Schlitz für einen Schraubenzieher versehen, an der von der Anlagefläche 11 abgewandten Seite des Körpers 10. Selbstverständlich kann der Bolzenkopf auch anders ausgeführt sein. An der Seite der Anlagefläche 11 ist eine im wesentlichen rechteckige Mutter 17 auf den Schraubenbolzen 15 aufgeschraubt.

Die Mutter 17 ist eine allgemein bekannte und kostengünstig herzustellende Ausführung mit einer flachen Oberseite 18 und dazu paralellelen Unterseite 19 und mit einer Länge, die größer als der Abstand zwischen den Flanschen 6, 7 der Oberseite des Profilelements 2 ist und mit einer Breite, die kleiner als der Abstand zwischen den Flanschen 6, 7 der Oberseite des Profilelements 2 ist. In diesem Beispiel ist die Mutter 17 an zwei diagonal einander gegenüberliegenden Winkeln 20, 21 abgeschrägt, dies ist aber nicht notwendig. Zwischen dem Bolzenkopf 16 und dem Körper 10 ist eine Druckfeder 22 angeordnet.

Der Körper 10 ist bei jeder Anlagefläche 11, 12 mit zwei an sich starren Vorsprüngen 25a, 25b und 26a, 26b versehen, die ab der Anlagefläche 11, 12 in Richtung auf die Mutter 17 herausragen und diametral zu der Öffung 13 in dem Körper für den Bolzen 15 aufgestellt sind. Die Vorsprünge 25a, 25b, 26a, 26b sind in den Figuren als zusätzlich an dem Körper angeformte Teile dargestellt, vorzugsweise sind diese Vorsprünge jedoch durch ein lokales Herauspressen von Teilen des blechernen Körpers 10 herzustellen.

Die Vorsprünge 25a, 25b, 26a, 26b ragen um eine Höhe über die zugehörige Anlagefläche 11, 12, die größer als die Stärke der Flansche 6, 7 des betreffenden Profilelements 2 ist, heraus. Die Höhe der Vorsprünge 25a, 25b, 26a, 26b ist mit Vorteil nur geringfügig größer, zum Beispiel einige Zehntel von Millimetern, als die Stärke der Flansche 6, 7.

Weiter besitzen die Vorsprünge 25a, 25b, 26a, 26a in einer Richtung quer zu der sie verbindenden imaginären Linie eine Abmessung, die nahezu dem Abstand zwischen den Flanschen 6, 7 des betreffenden Profilelements 2 entspricht.

Die Befestigungsanordnung ist dazu vorgesehen, an dem Profilelement 2 befestigt zu werden, indem der Körper 10 mit seiner Anlagefläche 11 an der Oberseite des betreffenden Profilelements 2 angeordnet wird. Hierzu passen die Vorsprünge 25a, 25b zwischen die Flansche 6, 7 des Profilelements 2, so daß der Körper 10 sich lediglich nur noch in Längsrichtung zu dem Profilelement 2 verschieben kann.

Um die Anlagefläche 11 an dem Profilelement 2 anordnen zu können, ist bereits bei der Herstellung der Befestigungsanordnung 1 dafür gesorgt, daß die Mutter 17 sich in einer geeigneten Montagestellung zu dem Körper 10 befindet. In dieser Montagestellung die in den Figuren 1 - 3 dargestellt ist, liegt die Längsachse der Mutter 17 parallel zu der Längsnut 8 in dem Profilelement 2.

Wenn die Anlagefläche 11 an der Oberseite des Profilelements 2 angeordnet ist, wird anschließend der Bolzen 15 und damit die auf diesen aufgeschraubte Mutter 17 in eine Klemmstellung gedreht, so daß die Mutter 17 die Flansche 6, 7 des Profilelements 2 hintergreift. Diese Klemmstellung ist in Figur 4 dargestellt und ist vorzugsweise um einen Winkel von mehr als 45° zu der Montagestellung gedreht.

Bei der Herstellung der dargestellten Befestigungsanordnung 1 wird die Mutter 17 an den Vorsprüngen 25a, 25b gehalten, und wird der Bolzen 15 so weit angezogen, daß die Mutter 17 in ihrer Montagestellung, die in den Figuren 1 - 3 dargestellt ist, unter einer von der Feder 22 erzeugten Vorspannung an den Vorsprüngen 25a, 25b anliegt. Die gewünschte Vorspannung entspricht einem bestimmten Anziehmoment des Bolzens 15. Die Größe dieser Vorspannung wird in solcher Weise eingestellt, daß die Mutter 17 in dem Zeitraum, der zwischen der Fertigung der Befestigungsanordnung 1 und deren Anwendung liegt, auf den Vorsprüngen 25a, 25b liegen bleibt. Die Größe dieser Vorspannung ist derart, daß die Reibung zwischen der Mutter 17 und den beiden Vorsprüngen 25a, 25b ein ausreichend großes Widerstandsmoment gegen eine unerwünschte Verdrehung der Mutter 17 ergibt. Es erweist sich als einfach, eine Vorspannung festzustellen, die dem unerwünschten Verdrehen der Mutter 17 bei einer in der Praxis normalen Handhabungsweise derartiger Befestigungsanordnungen während ihrer Lagerung und ihres Transports vorbeugt.

Die Vorspünge 25a, 25b liegen in einem solchen Abstand zueinander und der Öffnung, daß die Mutter 17 in der Klemmstellung frei von den Vorsprüngen 25a, 25b liegt und lediglich nur an den Flanschen 6, 7 des Profilelements 2 anliegt. Durch Vergleich der Figuren 3 und 4 miteinander ist ersichtlich, daß beim Verdrehen der Mutter 17 aus der Montagestellung in die Klemmstellung, die Feder 22 bewirkt, daß der Bolzenkopf 16 sich vom Körper 10 wegbewegt. Die Feder 22 ist in solcher Weise ausgeführt, daß die Mutter 17 in ihrer Klemmstellung unter Vorspannung an der Unterseite der Flansche 6, 7 anliegt und zwar in solcher Weise, daß der Körper 10 provisorisch an seiner Stelle gehalten wird.

Vorzugsweise ist die Vorspannung in der Klemmstellung so groß, daß der Körper 10 auch an seiner Stelle bleibt, wenn das Profilelement 2 vertikal steht und bereits ein horizontal verlaufendes Profilelement mit dem anderen Teil der Befestigungsanordnung verbunden ist.

Diese Klemmung des Verbindungskörpers 10 an dem Profilelement 2 ergibt eine provisorische Befestigung, bei der es möglich ist, den Körper 10 entlang dem Profilelement 2 zu verschieben, ohne den Bolzen 15 losschrauben zu brauchen. Wenn der Verbindungskörper 10 sich an der schließlich erwünschten Stelle auf dem Profilelement 2 befindet, kann der Bolzen 15 angezogen werden, wobei die Mutter 17 an die Seiten 3, 4 des Profilelements 2 anläuft. Übrigens ist es nicht notwendig, daß die rechteckige Mutter 17 an die Seiten 3, 4 des Profilelements 2 anläuft, um den Bolzen 15 anziehen zu können. In vielen Fällen klemmt die Mutter 17 ausreichend fest an den Flanschen 6, 7 des Profilelements 2, um einem Mitdrehen entgegenzutreten. Auch kann die Mutter 17 an der Oberseite 18 mit reibungserhöhenden Rippen oder dergleichen versehen sein, dasselbe kann an der Unterseite der Flansche 6, 7 des Profilelements 2 vorgesehen sein. Weiter ist es zum Beispiel möglich, daß die Mutter mit Anschlägen, die in der Klemmstellung der Mutter an den Seitenrändern der Flansche 6, 7 anliegen, versehen ist und so das unerwünschte Mitdrehen der Mutter verhindern.

Die Feder 22 hat eine geringe Höhe und ist vorzugsweise aus einer dünnen Federstahlplatte hergestellt, so daß in dem angezogenen Zustand des Bolzens 15, die Feder 22 zu einer Art von flachem Unterlegring plattgedrückt worden ist. Zum Beispiel ist die Feder 22 ein flacher Ring aus Federstahl, wobei aus dem äußeren Umzugsrand mehrere federnde Schenkel ab der Ringfläche umgebogen sind, welche Schenkel sich auf den Körper 10 abstützen.

Es wird deutlich sein, daß die Bolzenanordnung auch aus einem Schraubenbolzen mit einem länglichen Bolzenkopf und einer auf den Schraubenbolzen aufgeschraubten Mutter zusammengesetzt sein kann, wobei der Bolzenkopf an der Seite der Anlagefläche des Körpers liegt. Diese Ausführung entspricht im Prinzip der in der US 4 830 531 beschriebenen Ausführungsform.

In einer anderen Variante kann die Bolzenanordnung aus einem Stück Gewindestange, mit einer länglichen Mutter an der Seite der Anlagefläche des Körpers und einer anderen Mutter an der anderen Seite des Körpers, aufgebaut sein.

Weiter können die Profilelemente auch des Typs sein, der in der US 4 830 531 dargestellt worden ist, bei dem die Flansche der Oberseite mit zum Boden gerichteten Endteilen versehen sind. Dabei ist es vorteilhaft, wenn die die Flansche hintergreifende Mutter oder der Bolzenkopf an der zu den Flanschen gerichteten Seite mit zwei parallelen Rillen versehen sind um in deren Klemmstellung die Endteile der Flansche des Profilelements auf zunehmen.

Es wird deutlich sein, daß der Körper auch eine andere Form als die in der Zeichnung dargestellte Form haben kann, zum Beispiel T-förmig zum Verbinden dreier Profilelemente oder kreuzförmig, zum Verbinden vierer Profilelemente.

Vorzugweise wird bei der Fertigung der Befestigungsanordnung 1 die Mutter 17 in solcher Weise auf dem Bolzen 15 gesichert, daß die Mutter 17 zumindestens in dem Zeitraum zwischen der Herstellung der Anordnung und der Montage an einem Profilelement 2 an ihrer Stelle auf dem Bolzen 15 bleibt. Hierbei wird vorzugsweise während der Herstellung der Anordnung ein flüssiges Sicherungsmittel zwischen die Mutter 17 und das Gewinde des Bolzens 15 eingebracht, welche Flüssigkeit dann aushärtet und die Mutter 17 festsetzt. Auch können Bolzen oder Muttern, die bereits vorher mit einer Schicht Sicherungsmittel auf dem Gewindeteil versehen sind, verwendet werden. Eine derartige Sicherung kann bei der Montage der Anordnung an einem Profilelement 2 leicht zerbrochen werden, wenn der Bolzen 15 angezogen wird, und die Mutter 17 in ihrer Klemmstellung gelangt. Es ist vorteilhaft, wenn auch nach dem endgültigen Anziehen des Bolzens 15, das Sicherungsmittel einigermaßen seine sichernde Wirkung behält, so daß einem Losrütteln der Befestigung entgegengetreten wird.

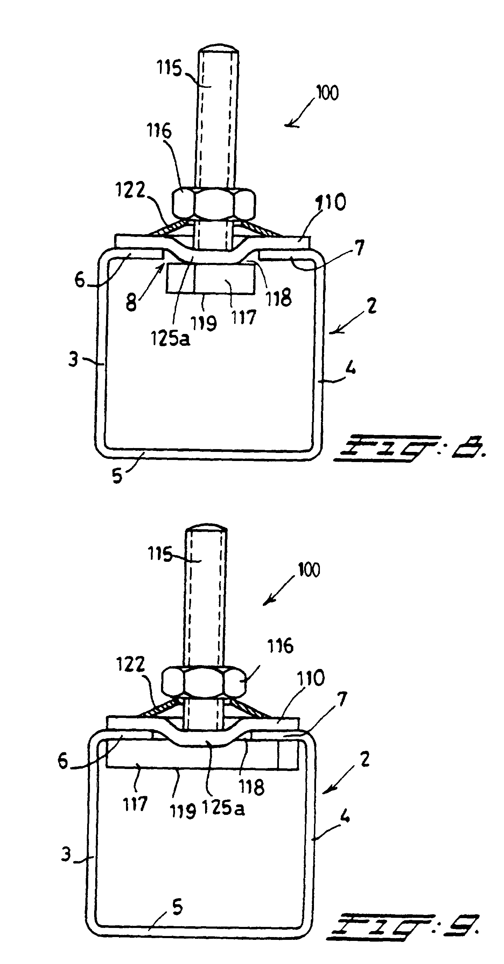

In Figur 5 ist ein Teil eines steifen Körpers 51 einer erfindungsgemäßen Befestigungsanordnung 50 dargestellt. Bei diesem Körper 51 sind an der Seite der Anlagefläche 52, diametral zu dem Bolzenloch 44, federnde Vorsprünge 30a, 30b vorgesehen. Diese Vorsprünge 30a, 30b sind jeweils aus zwei sich gegenüberliegenden, federnden Lippen, die aus dem metallischen Körper herausgedrückt sind, zusammengesetzt. Gegebenfalls kann der Körper 51 an der Stelle der Vorsprünge 30a, 30b erst dünner gemacht sein, um die gewünschte federnde Wirkung zu erhalten. Durch das Schaffen federnder Vorsprünge würde zum Festhalten der Mutter in der Montagestellung auf den Vorsprüngen im Prinzip auf die Feder 22 in Figur 1 verzichtet werden können. Damit geht aber auch die provisorische Klemmmöglichkeit verloren, so daß eine weitere Anwendung der Feder 22 bevorzugt ist. In einer Variante sind die federnden Vorsprünge 30a, 30b aus Federstahl gebildet.

Die in den Figuren 6 - 9 dargestellte Befestigungsanordnung 100 ist als ein Ganzes vormontiert und zur Befestigung eines Gegenstandes, zum Beispiel einer Rohrschelle mit einer an dieser angeordneten Befestigungsmutter, an einem metallischen Profilelement 2 des obenbeschriebenen Typs, vorgesehen.

Die Anordnung 100 umfaßt einen starren, metallischen Körper 110, der als Schließringkörper, mit einer Anlagefläche 111 für die Oberseite des Profilelements 2, fungiert. Bei der Anlagefläche 111 ist eine durchgehende Öffnung 113 in dem Körper 110 angeordnet, durch die ein Schraubenbolzen steckt. Auf den Bolzen 115 ist eine Mutter 116 mit einer Feder 122 zwischen der Mutter und dem Körper 110 aufgeschraubt. An der Seite der Anlagefläche 111 hat der Schraubenbolzen 115 einen im wesentlichen rechteckigen Bolzenkopf 117. Der mit dem Profilelement 2 zu verbindende Gegenstand kann hierbei auf das freie und mit einem Gewinde versehene Ende des Schraubenbolzens 115 aufgeschraubt werden.

Der Bolzenkopf 117 ist einer allgemein bekannten und kostengünstig herzustellenden Ausführung mit einer flachen Oberseite 118 und einer hierzu parallelen Unterseite 119 und mit einer Länge, die größer als der Abstand zwischen den Flanschen 6, 7 der Oberseite des Profilelements 2 ist und mit einer Breite, die kleiner als der Abstand zwischen den Flanschen 6, 7 der Oberseite des Profilelements 2 ist.

Der Körper 110 ist mit zwei nach außen gepreßten Vorsprüngen 125a, 125b, die ab der Anlagefläche 111 in Richtung auf den Bolzenkopf 117 herausragen, versehen und diametral zu der Öffnung 113 aufgestellt.

Die Vorsprünge 125a, 125b ragen um eine Höhe, die größer als die Stärke der Flansche 6, 7 des betreffenden Profilelements 2 ist, zum Beispiel einige Zehntel von Millimetern, heraus. Weiter haben die Vorsprünge 125a, 125b eine Querabmessung, die dem Abstand zwischen den Flanschen 6, 7 nahezu entspricht.

Die Anordnung 100 ist dazu vorgesehen, in im wesentlichen derselben Weise wie anhand der Figuren 1 - 4 erläutert, an dem Profilelement befestigt zu werden. Hierbei wird die Anordnung 100, wie in Fig. 8 dargestellt, an der Oberseite des Profilelements angeordnet. Anschließend wird der Schraubenbolzen 115 und damit der Bolzenkopf 117 in die Klemmstellung gedreht, so daß der Bolzenkopf 117 die Flansche 6, 7 des Profilelements 2 hintergreift. Diese Klemmstellung ist in Figur 9 dargestellt.

Bei der Herstellung der Anordnung 100 wird der Bolzenkopf 117 an den Vorsprüngen 125a, 125b gehalten und wird die Mutter 116 so weit auf den Schraubenbolzen 115 gedreht, daß der Bolzenkopf 117 in seiner Montagestellung, die in den Figuren 6 - 8 dargestellt ist, unter einer von der Feder 122 erzeugten Vorspannung an den Vorsprüngen 125a, 125b anliegt. Die gewünschte Vorspannung ist derart, daß die Reibung zwischen dem Bolzenkopf 117 und den beiden Vorsprüngen 125a, 125b ein ausreichend großes Moment ergibt, um eine unerwünschte Verdrehung des Bolzenkopfes 117 zu verhindern.

Die Vorsprünge 125a, 125b liegen in solcher Weise, daß der Bolzenkopf 117 in der Klemmstellung frei von den Vorsprüngen 125a, 125b liegt und lediglich nur an den Flanschen 6, 7, des Profilelements anliegt. Durch Vergleich der Figuren 8 und 9 miteinander , ist ersichtlich, daß beim Verdrehen des Bolzenkopfes 117 von der Montagestellung in die Klemmstellung, die Feder 122 bewirkt, daß die Mutter 116 sich von dem Körper wegbewegt. Die Feder 122 ist so ausgeführt, daß der Bolzenkopf 117 in seiner Klemmstellung unter Vorspannung an der Unterseite der Flansche 6, 7 anliegt und zwar so, daß die Anordnung 100 provisorisch an ihrer Stelle gehalten wird, während ein Sichverschieben entlang dem Profilelement 2 möglich bleibt.

Wenn die Anordnung 100 sich an der schließlich gewünschten Stelle an dem Profilelement befindet, kann die Mutter 116 angezogen werden, wobei der Bolzenkopf 117 an die Seiten 3, 4 des Profilelements 2 anläuft. Übrigens ist es nicht notwendig, daß der rechteckige Bolzenkopf 117 an die Seiten 3, 4 des Profilelements 2 anläuft, um die Mutter 16 fest anziehen zu können. In vielen Fällen klemmt der Bolzenkopf 117 ausreichend fest an den Flanschen 6, 7 des Profilelements 2, um einem Mitdrehen entgegenzutreten. Auch kann der Bolzenkopf 117 an der Oberseite 118 mit reibungserhöhenden Rippen oder dergleichen versehen sein, dasselbe kann an der Unterseite der Flansche 6, 7 des Profilelements 2 vorgesehen sein. Weiter ist es zum Beispiel möglich, daß der Bolzenkopf mit Anschlägen, die in der Klemmstellung der Mutter an den Seitenrändern der Flansche 6, 7 anliegen, versehen ist und so das unerwünschte Mitdrehen der Mutter verhindern.

Zum Beispiel ist die Feder 122 ein flacher Ring aus Federstahl, bei dem aus dem äußeren Umzugsrand mehrere Schenkel ab der Ringfläche umgebogen sind. Weiter kann das Profilelement auch des Typs sein, bei dem die Flansche der Oberseite mit zum Boden gerichteten Endteilen versehen sind. Dabei ist es vorteilhaft, wenn der die Flansche hintergreifende Bolzenkopf oder die Mutter an der zu den Flanschen gerichteten Seite mit zwei parallelen Rillen zum Aufnehmen der Endteile der Flansche des Profilelements in deren Klemmstellung versehen ist.

## Patentansprüche

1. Vormontierte Befestigungsanordnung zum Verbinden eines Profilelements (2) mit einem Gegenstand, zum Beispiel einem oder mehreren ähnlichen Profilelementen, wobei das Profilelement von dem Typ ist, der zwei im wesentlichen parallele und sich in Längsrichtung erstreckende Seiten (3, 4), einen Böden (5), der die Seiten verbindet, und eine Oberseite aufweist, und die Oberseite von zwei von den Seiten (3, 4) nach innen gerichteten Flanschen (6, 7), die zwischen sich eine Längsnut (8) begrenzen, gebildet ist, wobei die Befestigunsanordnung einen im wesentlichen steifen Körper (10; 51; 110) umfaßt, der eine oder mehrere Anlageflächen (11,12; 52; 111) definiert, jeweils für die Oberseite eines zu verbindenden Profilelements (2), und der an jeder Anlagefläche (11,12; 52,11) mit einer durchgehenden Öffnung (13,14; 44; 113) für eine Bolzenanordnung versehen ist, wobei die Bolzenanordnung ein mit einem Außengewinde versehenes Stangenelement (15; 115) umfaßt, das durch die zugehörige Öffnung (13,14; 44; 113) in dem Körper steckt, wobei auf dem Stangenelement ein erstes Mutterelement (16; 116) an der von der Anlagefläche abgewandten Seite des Körpers vorgesehen ist, und wobei an der Seite der Anlagefläche (11,12) auf dem Stangenelement (15; 115) ein längliches zweites Mutterelement (17; 117) vorhanden ist, wobei das längliche zweite Mutterelement (17; 117) eine Länge hat, die größer als der Abstand zwischen den Flanschen (6,7) der Oberseite des Profilelements (2) ist, und eine Breite hat, die kleiner als der Abstand zwischen den Flanschen (6, 7) der Oberseite des Profilelements (2) ist, an
wobei der Körper (10; 51; 110) an jeder Anlagefläche (11,12) mit mehreren Vorsprüngen (25a,25b,26a,26b; 30a, 30b; 125a, 125b) versehen ist, die von der Anlagefläche in Richtung auf das längliche, zweite Mutterelement (17; 117) herausragen und diametral zu der Öffnung (13,14; 44; 113) in dem Körper angeordnet sind,
und wobei die Befestigungsanordnung (1; 50; 100) dazu ausgelegt ist, an einem Profilelement (2) befestigt zu werden, indem der Körper mit einer seiner Anlageflächen an der Oberseite des betreffenden Profilelements angeordnet wird, wobei das betreffende zweite Mutterelement (17; 117) sich in einer Montagestellung (Figuren 1 - 3; 6 - 8) zu dem Körper befindet, in der das zweite Mutterelement (17; 117) auf den Vorsprüngen aufliegt, und anschließend das zweite Mutterelement in eine Klemmstellung (Fig. 4; 8) gedreht wird, so daß das zweite Mutterelement die Flansche (6, 7) des Profilelements hintergreift und das zweite Mutterelement in der Klemmstellung frei von den Vorsprüngen liegt, wobei weiter das zweite Mutterelement gegen eine unerwünsche Verdrehung aus der Montagestellung gegenüber dem Körper gesichert ist, **dadurch gekennzeichnet, daß** die Sicherung gegen eine unerwünschte Verdrehung des zweiten Mutterelements (17; 117) aus der Montagestellung (Fig. 1 - 3; 6 8) larin besteht, daß das zweite Mutterelement (17;117) unter Vorspannung gegen die Vorsprünge (25a,25b,26a,26b; 30a,30b; 125a,125b) gezwängt ist.

2. Befestigungsanordnung nach Anspruch 1, bei der die Bolzenanordnung einen Schraubenbolzen (15) mit Bolzenkopf (16) umfaßt, wobei der Bolzenkopf (16) des erste Mutterelement bildet.

3. Befestigungsanordnung nach Anspruch 1, bei der die Bolzenanordnung einen Schraubenbolzen (115) mit länglichem Bolzenkopf (117) umfaßt, welcher das zweite Mutterelement bildet.

4. Befestigungsanordnung nach Anspruch 1, bei der die Bolzenanordnung eine Gewindestange mit einer auf diese aufgeschraubten ersten Mutter umfaßt, die das erste Mutterelement bildet, und einer auf diese aufgeschraubten länglichen zweiten Mutter, die das zweite Mutterelement bildet.

5. Befestigungsanordnung nach einem oder mehreren der vorhergehenden Ansprüchen, bei der die Vorsprünge (25a,25b,26a,26b; 30a,30b; 125a,125b) um eine Höhe über die zugehörige Anlagefläche (11,12; 51;111), die größer als die Stärke der Flansche (6, 7) des betreffenden Profilelements (2) ist, herausragen.

6. Befestigungsanordnung nach einem oder mehreren der vorhergehenden Ansprüchen, bei der die Vorsprünge (25a,25b;26a,26b;30a,30b;125a,125b) in einer Richtung quer zu der sie verbindenden imaginären Linie eine Abmessung haben, die nahezu dem Abstand zwischen den Flanschen (6,7) des betreffenden Profilelements entspricht.

7. Befestigungsanordnung nach einem oder mehreren der vorhergehenden Ansprüchen, bei der eine separate Feder (22; 122) vorgesehen ist, die das zweite Mutterelement (17; 117) in seiner Montagestellung unter Vorspannung an den Vorsprüngen hält.

8. Befestigungsanordnung nach einem oder mehreren der vorhergehenden Ansprüchen, bei der die Vorsprünge (30a, 30b) federnd zu dem steifen Körper (51) sind.

9. Befestigungsanordnung nach einem oder mehreren der vorhergehenden Ansprüchen, bei der das erste und/oder das zweite Mutterelement (17; 116), jeweils mit einem Sicherungsmittel, vorzugsweise einer aushärtenden Sicherungsflüssigkeit, jeweils auf dem mit einem Außengewinde versehenen Stangenelement gesichert sind.

10. In Kombination ein Profilelement und eine Befestigungsanordnung nach einem oder mehreren der vorhergehenden Ansprüchen.

11. System zum Zusammensetzen eines Rahmens von Profilelementen, in Kombination umfassend Profilelemente (2), die jeweils zwei sich in Längsrichtung erstreckende Seiten (3,4), einen Boden (5), der die Seiten verbindet, und eine Oberseite aufweisen, wobei die Oberseite von zwei von den Seiten nach innen gerichteten Flanschen (6,7), die zwischen sich eine Längsnut (8) begrenzen, gebildet ist, und eine Befestigungsanordnung (1;50;100) nach einem oder mehreren der vorhergehenden Ansprüchen.

## Claims

1. Prefabricated fastening device for connecting a profile element (2) with an object, for example one or more similar profile elements, whereby the profile element is of the type that has two essentially parallel sides (3, 4) extending longitudinally, a base (5), which connects the sides, and an upper side, the upper side being formed of two flanges (6, 7), which are turned inwards from the sides (3, 4) and form a longitudinal groove (8) between them, whereby the fastening device comprises an essentially rigid body (10; 51; 110) which defines one or more contact surfaces (11, 12, 52, 111), each for the upper side of a profile element (2) to be connected, and which is provided on each contact surface (11, 12; 52; 11), with a continuous opening (13, 14; 44; 113) for a bolt arrangement, the bolt arrangement comprising a rod element (15; 115) with an external thread that projects through the associated opening (13, 14; 44; 113) in the body, whereby on the rod element a first nut element (16; 116) is provided on the side of the body turned away from the contact surface, and whereby on the side of the contact surface (11, 12) an elongated second nut element (14; 117) is provided on the rod element (15; 115), the elongated second nut element (17; 117) being of a length that is greater than the distance between the flanges (6, 7) of the upper side of the profile element (2) and a width that is less than the distance between the flanges (6, 7) of the upper side of the profile element (2), whereby the body (10; 51; 110) is provided on each contact surface (11, 12) with several projections (25a, 25a, 26a, 26b; 30a, 30b; 125a, 125b), which project from the contact surface in the direction of the elongated second nut element (17; 117) and are arranged diametrically to the opening (13, 14; 44; 113) in the body, and whereby the fastening device (1; 50; 100) is designed to be fastened to a profile element (2) in that the body is arranged with one of its surfaces on the upper side of the profile element in question, with the relevant second nut element (17; 117) being in an assembly position (figures 1-2; 6-8) with regard to the body in which the second nut element (17; 117) is in contact with the projections and the second nut element is then turned into a clamping position (figure 4; 8) so that the second nut element engages behind the flanges (6, 7) of the profile element and second nut element is free of the projections in the clamping position, whereby the second nut element is secured against unwanted turning from the assembly position vis-à-vis the body **characterised in that** securing against unwanted turning of the second nut element (17; 117) from the assembly position (figures 1-3; 6, 8)consists in the second nut element (17; 117) being forced against the projections (25a, 25a, 26a, 26b; 30a, 30b; 125a, 125b) through initial tension.

2. Fastening device according to claim 1, in which the bolt arrangement comprises a screw-type bolt (15) with a bolt head (16), whereby the bolt head (16) forms the first nut element.

3. Fastening device according to clam 1, in which the bolt arrangement comprises a screw-type bolt (115) with an elongated bolt head (117) which forms the second nut element.

4. Fastening device according to claim 1, in which the bolt arrangement comprises a threaded rod with a first nut screwed thereon which forms the first nut element, and an elongated second nut screwed thereon which forms the second nut element.

5. Fastening device according to one or more of the preceding claims, in which the projections (25a, 25a, 26a, 26b; 30a, 30b; 125a, 125b), project above the associated contact surface (11, 12; 51; 11) by a height that is greater than the thickness of the flanges (6, 7) of the relevant profile element (2).

6. Fastening device according to one or more of the preceding claims, in which the projections (25a, 25a, 26a, 26b; 30a, 30b; 125a, 125b), in a direction perpendicular to the imaginary line connecting them are of a dimension that almost corresponds to the distance between the flanges (6, 7) of the relevant profile element.

7. Fastening device according to one or more of the preceding claims, in which a separate spring (22; 122) is provided, which holds the second nut element (17; 117) in its assembly position against the projections under initial tension.

8. Fastening device according to one or more of the preceding claims in which the projections (30a, 30b) are sprung with regard to the rigid body (51).

9. Fastening device according to one or more of the preceding claims in which the first and/or the second nut element (17; 116) are each locked on the externally threaded rod element with locking means, preferably a solidifying locking liquid.

10. In combination a profile element and a fastening device according to one or more of the preceding claims.

11. System for assembling a framework of profile elements in combination comprising profile elements (2), which each have two longitudinal extending sides (3, 4), a base (5) connecting the sides, and an upper side, whereby the upper side is formed of two flanges (6, 7) turned inwards from the sides and forming a longitudinal groove (8) between them, and a fastening device (1; 50; 100) according to one or more of the preceding claims.

## Revendications

1. Dispositif de fixation prémonté destiné à assembler un élément profilé (2) à un objet, par exemple à un ou plusieurs éléments profilés analogues, l'élément profilé étant du type qui comprend deux côtés (3, 4) sensiblement parallèles s'étendant dans la direction longitudinale, un fond (5) qui relie les côtés (3, 4) et un côté supérieur, le côté supérieur étant formé de deux ailes (6, 7) dirigées vers l'intérieur en partant des côtés (3, 4), et délimitant entre elles une rainure longitudinale (8),
le dispositif de fixation comprenant un corps (10 ; 51; 110) sensiblement rigide, qui définit une ou plusieurs surfaces de portée (11, 12 ; 52 ; 111), chacune pour le côté supérieur d'un élément profilé (2) à assembler, et qui est muni, sur chaque surface de portée, d'un trou traversant (13, 14 ; 44 ; 113) pour un dispositif à boulon, le dispositif à boulon comprenant un élément de tige (15 ; 115) muni d'un filetage extérieur, qui est enfilé dans le corps à travers le trou (13, 14 ; 44 ; 113) correspondant, un premier élément d'écrou (16 ; 116) étant prévu sur l'élément de tige, du côté du corps qui est à l'opposé de la surface de portée, et un deuxième élément d'écrou (17 ; 117) de forme allongée étant présent du côté de la surface de portée (11, 12) sur l'élément de tige (15 ; 115), le deuxième élément d'écrou (17 ; 117) de forme allongée présentant une longueur qui est plus grande que la distance entre les ailes (6,7) du côté supérieur de l'élément profilé (2) et une largeur qui est plus petite que
la distance entre les ailes (6,7) du côté supérieur de l'élément profilé (2) ;
dans lequel le corps (10 ; 51 ; 110) est muni, sur chaque surface de portée (11, 12), de plusieurs bossages (25a, 25b, 26a, 26b ; 30a, 30b ; 125a, 125b) qui font saillie à partir de la surface de portée en direction du deuxième élément d'écrou de forme allongée (17 ; 117) et sont disposées diamétralement par rapport au trou (13, 14 ; 44 ; 113) ménagé dans le corps,
et dans lequel le dispositif de fixation (1 ; 50 ; 101) est conçu pour être fixé à un élément profilé (2) par le fait qu'on dispose le corps avec l'une de ses surfaces de portée contre le côté supérieur de l'élément profilé considéré, le deuxième élément d'écrou considéré (17 ; 117) se trouvant alors par rapport au corps dans une position de montage (Fig. 1-3 ; 6-8) dans laquelle le deuxième élément d'écrou (17 ; 117) s'appuie sur les bossages et, ensuite, on tourne le deuxième élément d'écrou dans une position de serrage (Fig. 4 ; 8) de sorte que le deuxième élément d'écrou porte derrière les ailes (6, 7) de l'élément profilé et que le deuxième élément d'écrou soit dégagé des bossages dans la position de serrage, le deuxième élément d'écrou étant en outre bloqué contre une rotation intempestive qui l'éloignerait du corps dans la position de montage, **caractérisé en ce que** le blocage contre une rotation intempestive du deuxième élément d'écrou (17 ; 117) dans la position de montage (Fig. 1-3 ; 6-8) est constitué par le fait que le deuxième élément d'écrou (17 ; 117) est pressé sous contrainte contre les bossages (25a, 25b, 26a, 26b ; 30a, 30b ; 125a, 125b).

2. Dispositif de fixation selon la revendication 1, dans lequel le dispositif à boulon comprend un boulon fileté (115) muni d'une tête de boulon (16), la tête de boulon (16) formant le premier élément d'écrou.

3. Dispositif de fixation selon la revendication 1, dans lequel le dispositif à boulon comprend un boulon fileté (115) muni d'une tête de boulon (117) de forme allongée formant le deuxième élément d'écrou.

4. Dispositif de fixation selon la revendication 1, dans lequel le dispositif à boulon comprend une tige filetée avec un premier écrou vissé sur elle, formant le premier élément d'écrou, et un deuxième écrou de forme allongée vissé sur cette tige et formant le deuxième élément d'écrou.

5. Dispositif de fixation selon une ou plusieurs des revendications précédentes, dans lequel les bossages (25a, 25b, 26a, 26b ; 30a, 30b ; 125a, 125b) font saillie de la surface de portée (11, 12 ; 51 ; 111) correspondante sur une hauteur qui est plus grande que l'épaisseur des ailes (6,7) de l'élément profilé (2) considéré.

6. Dispositif de fixation selon une ou plusieurs des revendications précédentes, dans lequel les bossages (25a, 25b, 26a, 26b ; 30a, 30b ; 125a, 125b) ont, dans une direction transversale à la ligne imaginaire qui les joint, une dimension qui correspond à peu près à la distance entre les ailes (6, 7) de l'élément profilé considéré.

7. Dispositif de fixation selon une ou plusieurs des revendication précédentes, dans lequel il est prévu un ressort séparé (22 ; 122) qui maintient le deuxième élément d'écrou (17 ; 117) contre les bossages sous contrainte dans sa position de montage.

8. Dispositif de fixation selon une ou plusieurs des revendications précédentes, dans lequel les bossages (30a, 30b) sont élastiques par rapport au corps rigide (51).

9. Dispositif de fixation selon une ou plusieurs des revendications précédentes, dans lequel le premier et/ou le deuxième élément d'écrou (17 ; 116) sont bloqués sur l'élément de tige muni d'un filetage, par un moyen de blocage, de préférence un liquide de blocage durcissable.

10. Combinaison d'un élément profilé et d'un dispositif de fixation selon une ou plusieurs des revendications précédentes.

11. Système pour assembler une structure d'éléments profilés, comprenant, en combinaison, des éléments profilés (2) comprenant chacun deux côtés (3,4) qui s'étendent dans la direction longitudinale, un fond (5) qui relie les côtés et un côté supérieur, le côté supérieur étant formé de deux ailes (6, 7) dirigées vers l'intérieur à partir des côtés, qui délimite entre elles une rainure longitudinale, et un dispositif de fixation (1 ; 50; 100) selon une ou plusieurs des revendications précédentes.
